Europäisches Patentamt

(19) European Patent Office

Office européen des brevets

(11) Publication number: **0 187 502**
**A2**

## (12) EUROPEAN PATENT APPLICATION

(21) Application number: **85309160.1**

(22) Date of filing: **16.12.85**

(51) Int. Cl.⁴: **H 02 G 3/04**

(30) Priority: **21.12.84 GB 8432332**

(43) Date of publication of application:
**16.07.86 Bulletin 86/29**

(84) Designated Contracting States:
**DE FR IT**

(71) Applicant: **Critchley Limited**
**Brimscombe Stroud**
**Gloucestershire, GL5 2TH(GB)**

(72) Inventor: **Powell, Terence John**
**Wilbur House Middle Leaze**
**Stroud Gloucesterhire(GB)**

(72) Inventor: **Wilton, Anthony John**
**Pound House The Ryelands**
**Randwick Stroud Gloucestershire(GB)**

(74) Representative: **James, Michael John Gwynne et al,**
**Wynne-Jones, Lainé & James 22, Rodney Road**
**Cheltenham Gloucestershire GL50 1JJ(GB)**

(54) Improvements relating to flexible tubing.

(57) A trunking system is provided for optical fibre cables which will be secured by collar portions 4 carried by strips 1 which are secured to a wall surface by means of a screw passing through a passageway 3. Each strip 1 is formed with longitudinal ribs 6 at both sides which will mate with complementary grooves 8 formed on the inner walls of a continuous trunking sleeve 2. The side arms of the trunking sleeve 2 are flexible so that they can be pushed over the ribs 6 as a snap fit.

FIG.I.

EP 0 187 502 A2

0187502

## "Improvements relating to flexible tubing"

This invention relates to a means for housing flexible cables such as optic fibre cables (which comprise bundles of fibres within a surrounding sheath). Desirably these cables should be housed within a protective casing which will be mounted on walls or the like. The regularity with which some form of fixing means is needed to support the cable along its length will depend largely on the direction in which the cable is travelling on a wall or the like. Optical fibre cables in particular need to be well supported on long vertical runs but a reduced frequency of support is acceptable for horizontal runs.

According to the present invention there is provided a trunking system for optical fibre cables comprising strips for attachment to a wall or the like and a trunking sleeve to be positioned over the strips, each strip defining one or more retaining means for the cables and the strips and trunking sleeve also defining mutually co-operating ribs such that the trunking sleeve can be secured to the strips as a result of flexing of the side walls of the trunking sleeve outwardly until the ribs interengage with a snap fit.

The retaining means can be positioned at any desired specing along the length of a run of cable

MJ/MIO                    -1-

to be supported and the means of interconnecting the strips and trunking sleeve is ideal because it is independent of the spacing of the retaining means. A further advantage of the interengaging ribs is that it is possible to allow for wall irregularities or other factors whilst ensuring that there are no appreciable gaps between the trunking sleeve and the wall or the like to which the system is attached. Thus the system may be so designed that there are alternative sets of ribs on the strips and/or on the trunking sleeve enabling the extent of interengagement to be varied as required. In order to reduce the effects of vibration on the cable supported by the retaining means of the strips, or for other purposes, it may be desirable to provide a resilient mounting pad for the base of each strip. This will again alter the extent to which the trunking sleeve needs to be pressed over the strips in order for the trunking sleeve to be a relatively flush fit against the wall.

In a preferred arrangement the retaining means comprises an open mouthed collar in which a cable may be received as a snap fit. With advantage there will be separate retaining means (such as collars) provided at each end of each strip.

The trunking sleeve may be provided with longitudinal external ridges which will assist in providing the necessary degree of flexing and/or will provide a decorative effect.

The invention may be performed in various ways and a preferred embodiment will now be described with reference to the accompanying drawings, in which:-

Figure 1 is an end view of a trunking system of this invention;

Figure 2 is a plan view of a retaining strip of the trunking system shown in Figure 1; and

Figure 3 is a side view of the strip.

The trunking system illustrated in the drawings comprises a series of strips 1 onto which is secured a trunking sleeve 2. Each strip has a central passageway 3 for receipt of a fixing screw or bolt. Upwardly extending collar portions 4 are formed at each end of the strip. The open mouth 5 of each collar 4 is slightly narrower than the diameter of an optical fibre cable which is intended to be supported within the trunking system so that the optical fibre cable may be pushed home as a snap fit into the collar 4. A modified shape for the collar is illustrated in dashed outline 4A which may give a greater degree of flexibility to ensure a suitable snap fit without damaging the cable.

The sides of the strips are formed with longitudinal ribs 6. Complementary rib and grooved formations 7 are defined by the inner walls of the trunking sleeve 2. In this instance the formations define two grooves 8. The trunking sleeve 2 is secured over the strips 1 (so as to enclose the cable held by the strips) by pushing the trunking sleeve 2 over the strips 1 so that the side walls of the trunking sleeve flex until the ribs 6 snap into one or other of the grooves 8.

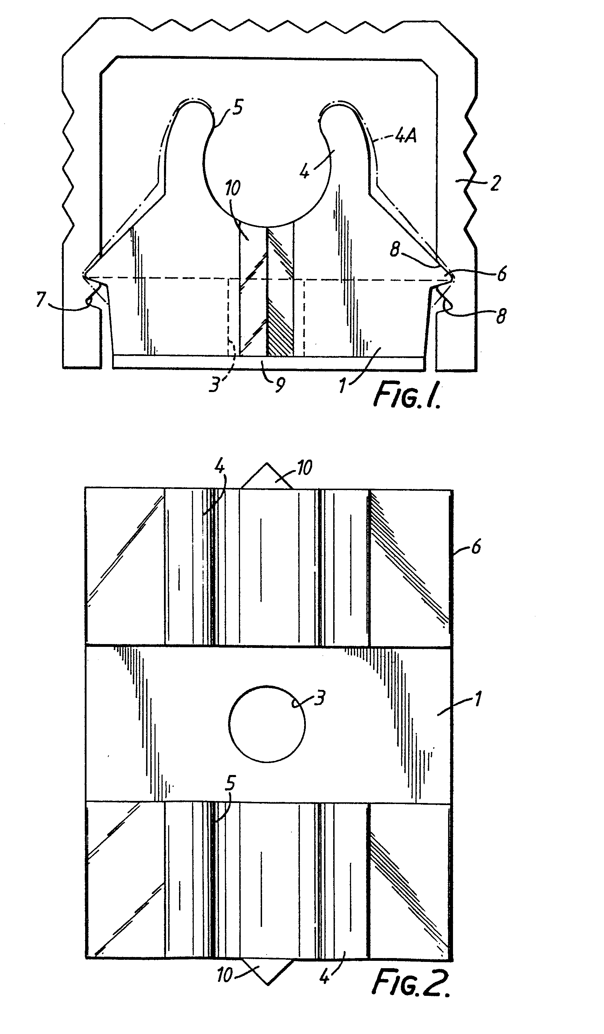

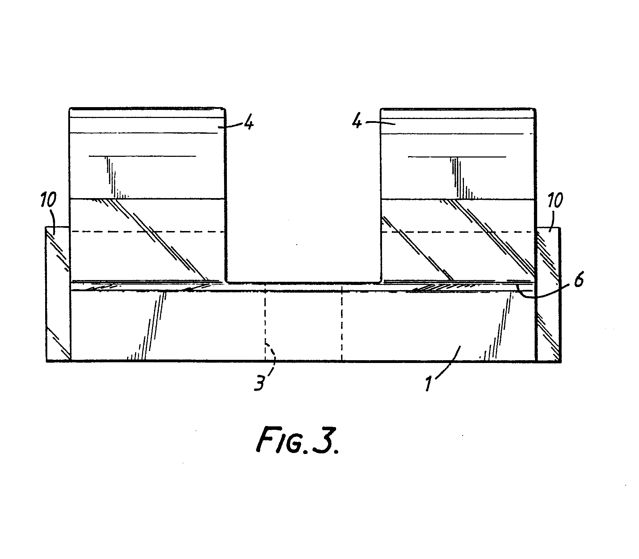

As illustrated in Figure 1 the strip 1 is provided with a resilient mounting pad 9 at its base which of course raises the ribs 6 to some extent above the wall surface to which the strips are secured. Hence it is necessary for the second set of grooves 8 to locate over the ribs 6 in this instance to ensure that the trunking sleeve 2 is substantially flush with the wall surface. The mounting pad 9 is provided with an adhesive surface which can be stuck on a wall or panel, so that fixing screws are not then needed. If the mounting pad 9 is omitted from the strip 1, only the first set of grooves 8 will need to locate over the ribs 6 to ensure that the sleeve 2 is flush with a wall surface. Mounting pads 9 will normally be employed for uneven wall surfaces.

It will be appreciated that the number of rib and groove formations on the inner walls of the trunking sleeves 2 (and indeed the number of ribs 6 on the strip 1) may be increased to enable a greater range of interengagement between the strips 1 and the trunking sleeve 2. This would be particularly useful where the trunking system is to be applied to a wall having a very irregular surface.

Each strip 1 carries a V-section rib 10 at the dead centre of both ends. This provides means for aligning the strips precisely along a run line drawn on the wall.

The collars 4 of the strips grip and support the cable securely, especially in the vertical plane where it is envisaged that they will be set at approximate spacings of 50 to 75cm. A range of strips having varying sized collars 4 may be provided to suit cables of differing diameters. It will be appreciated that the system may be used for other purposes, such as for supporting small bore tubing for central heating systems.

0187502

CLAIMS

1. A trunking system for optical fibre cables comprising strips for attachment to a wall or the like and a trunking sleeve to be positioned over the strips, characterised in that each strip (1) defines one or more retaining means (5) for the cables and the strips and trunking sleeve (2) also defines mutually co-operating ribs (6, 8) such that the trunking sleeve can be secured to the strips as a result of flexing of the side walls of the trunking sleeve outwardly until the ribs interengage with a snap fit.

2. A trunking system according to claim 1, further characterised in that there are alternative sets of ribs (6, 8) on the strips (4) and/or on the trunking sleeve (2) enabling the extent of interengagement to be varied as required.

3. A trunking system according to claim 1 or claim 2, further characterised by a resilient mounting pad (9) for the base of each strip.

4. A trunking system according to claim 3, further characterised in that the mounting pad (9) is provided with an adhesive surface for securing to a wall or panel.

5. A trunking system according to any one of claims 1 to 4, further characterised in that each

MJ/MIO          -6-

**0187502**

retaining means (4) comprises an open mouthed collar in which a cable may be received as a snap fit.

6.  A trunking system according to any one of claims 1 to 5, further characterised in that separate retaining means (4) are provided at each end of each strip (1).

7.  A trunking system according to any one of claims 1 to 6, further characterised in that the trunking sleeve (2) is provided with longitudinal external ridges.

8.  A trunking system according to any one of claims 1 to 7, further characterised in that each strip (1) carries a V-section rib (10) projecting from the centre of both ends of the strip.

FIG.1.

FIG.2.

0187502

*FIG.3.*